# EUROPEAN PATENT SPECIFICATION

(11) **EP 4 500 041 B1**
(45) Date of publication and mention of the grant of the patent: **01.07.2026**
(21) Application number: 23717272.1
(22) Date of filing: 22.03.2023
(51) Int. Cl.: F16C 29/00, F16C 29/04, F16C 33/34, F16C 33/46, F16C 33/48, F16C 39/06

(54) **NON-RECIRCULATING ROLLING ELEMENT BEARING IN AN OVERRUNNING CAGE CONFIGURATION**
WÄLZLAGER OHNE RÜCKFÜHRUNG IN EINER FREILAUFKÄFIGKONFIGURATION
PALIER À ÉLÉMENTS ROULANTS SANS RECIRCULATION DANS UNE CONFIGURATION DE CAGE À ROUE LIBRE

(30) Priority: 25.03.2022 NL 2031406
(43) Date of publication of application: 05.02.2025
(73) Proprietor: Prodrive Technologies Innovation Services B.V., 5692 EM Son en Breugel (NL)
(72) Inventor: SENDEN, Moos, 5692 EM Son en Breugel (NL); HENDRIX, Ronny, 5692 EM Son en Breugel (NL)
(74) Representative: Arnold & Siedsma
(86) International application number: PCT/NL2023/050147
(87) International publication number: WO 2023/182884

(56) References cited:
- DE-A1- 102006 024 765
- DE-B1- 2 916 229
- JP-A- H0 972 334

## Description

### Technical field

The present invention generally relates to a non-recirculating rolling element bearing and in particular to a non-recirculating rolling element bearing in an overrunning cage configuration.

### Background art

Linear rolling element bearings typically offer a good trade-off between attributes relevant for guiding a linear displacement with high precision. Such linear rolling element bearings can be divided into linear recirculating rolling element bearings and linear non-recirculating rolling element bearings.

Linear recirculating rolling element bearings in theory do not have a limitation regarding stroke length. However, such bearings are more complex, and have a limited accuracy, precision and maximum speed.

Linear non-recirculating rolling element bearings provide the highest accuracy, precision and speed, however they typically have a short stroke. Non-recirculating rolling element bearings in an overrunning cage configuration may provide a longer finite stroke in comparison to conventional non-overrunning cage configurations. However, the disadvantage is that the overhangs, formed by unsupported protruding cage ends, tend to bend away from their respective rolling surfaces and vibrate under gravity and acceleration forces due to the lack of cage stiffness, which is detrimental for the accuracy, speed and precision. Furthermore, in embodiments wherein the cage overhangs may be very long this bending away can result in damage to for instance the rail, the cage and the surroundings. It may even result in cage rupture. For this reason, the maximum cage overhang is typically restricted to keep deformation of the cage due to gravity and acceleration forces to an acceptable level to prevent damage and disturbances.

DE2916229 B discloses a linear non-recirculating rolling element bearing, wherein the cage comprises projections which protrude into recesses running along the guide. Such mechanical means prevent the cage from bending away from the guide. However, such linear bearing comprising protrusions and recesses are more complex to manufacture, offer less rigidity, are more fragile, heavier and introduce additional friction.

DE102006024765 A1 discloses a linear non-recirculating rolling element bearing according to the preamble of claim 1, in an overrunning cage configuration wherein at least one magnet is arranged on or in the cage or on or in a guide rail, wherein the magnet is configured to exert a magnetic force between the cage and the guide rail. Therefore, the cage is biased towards the guide rail, which results in forcing the cage onto the rolling elements and/or the guide rail. Consequently, friction is introduced resulting in reduced precision and lifetime.

### Summary

It is an object of the invention to overcome the disadvantages related to known non-recirculating rolling element bearings (e.g. linear or curved) in an overrunning cage configuration in general. Such non-recirculating rolling element bearings offer a finite stroke, also known as a limited stroke. Specifically, it is an object of the invention, to relax or remove limitations with respect to a maximum length of the cage overhangs, such that a longer (finite) stroke can be achieved.

Non-recirculating rolling element bearings typically provide a translation along a linear path, but may also provide a motion (e.g. translation) along a curved path. Non-recirculating bearings are opposed to recirculating, or infinite stroke bearings. Hence, non-recirculating rolling element bearings do not include bearings configured for providing a rotating motion of more than 360 degrees (i.e. infinite stroke), such as a rotary bearing or a revolution bearing.

According to a first aspect of the invention there is provided a rolling element bearing in an overrunning cage configuration according to the appended claims. Such a rolling element bearing solves the problems associated with rolling element bearings in an overrunning cage configuration known in the art by providing a guide and a cage comprising rolling elements that magnetically interact with one another so as to bias the cage towards the guide and thereby limit or prevent the cage overhangs from bending away from the guide, resulting in a reduction of vibrational and/or bending forces exerted on the cage. Furthermore, the magnetic interaction between the rolling elements and the guide itself prevent the introduction of any unwanted of friction between the cage, the rolling elements and the respective rolling surface.

A non-recirculating rolling element bearing in an overrunning cage configuration preferably comprises a guide defining a direction of motion between a first end and a second end of the guide, a motion stage arranged to move along the direction of motion between the first and second end of the guide, and a cage arranged to be partially interposed between the guide and the motion stage. The cage may comprise a plurality of rolling elements that may be positioned along the direction of motion, for instance forming an array. A first set of the rolling elements may be arranged to roll on a rolling surface of the guide and a rolling surface of the motion stage, for instance to support the movement of the motion stage along the guide. A third set of rolling elements may be arranged to roll on the rolling surface of the guide. The third set and the guide may be arranged to magnetically attract one another so as to bias the cage towards the guide and thereby prevent the cage overhangs from bending away from the guide.

In an exemplary embodiment of the present invention, the rolling element bearing comprises a guide, a motion stage and a cage. The guide defines a direction of motion and comprises a first guiding surface which may comprise a first and a second rolling surface defining a V-shape such that the first guiding surface may be arranged to be essentially V-shaped. The motion stage may be arranged to move along the direction of motion between a first end and a second end of the guide. The motion stage comprises a second guiding surface which may comprise a third and a fourth rolling surface arranged opposite to the first and second rolling surface, respectively. Such second guiding surface may also be arranged to be essentially V-shaped. The cage is partially interposed between the guide and the motion stage. The cage comprises a first, a second and a third set of rolling elements. The first set may be arranged to roll on the first and third rolling surface. The second set may be arranged to roll on the second and fourth rolling surface. The third set may be arranged to roll on the first rolling surface and optionally the third rolling surface. The guide and each rolling element of the third set are arranged to magnetically attract one another so as to bias the cage towards the guide. The third set of rolling elements is arranged such that in a first state of the rolling element bearing, in which the motion stage is moved towards the first end of the guide, a first rolling element of the third set is positioned between the second end of the guide and a first end of the motion stage arranged nearest to the second end of the guide. Furthermore, the third set of rolling elements is arranged such that in a second state, in which the motion stage is moved towards the second end of the guide, a second rolling element of the third set is positioned between the first end of the guide and a second end of the motion stage nearest to the first end of the guide.

In a preferred embodiment of a rolling element bearing according to the present invention, each rolling element of the third set is configured to magnetically attract the first rolling surface stronger than the second rolling surface. This has the benefit that the cage is mainly biased towards the first rolling surface which provides a surface whereon the rolling elements of the third set are arranged to roll and which surface is relevant for limiting or preventing the cage overhangs from bending away from the guide and to a lesser degree towards the second rolling surface which does not provide a surface whereon the rolling elements of the third set are arranged to roll. This improves the overall performance of the rolling element bearing, for instance by reducing frictional forces that may be introduced by a magnetic attraction between rolling elements of the third set and the second rolling surface. This may be achieved in various ways as will be evident from the remainder of the present disclosure.

Preferably, each rolling element of the third set is further configured to magnetically attract the first rolling surface stronger than at least one of the third and the fourth rolling surface, because the third and fourth rolling surfaces only come into play for a part of the cage which is enclosed between the first and the second guiding surface, which part is consequently prevented from bending away from the guide. Therefore, a magnetic attraction between rolling elements of the third set and the third and/or the fourth rolling surface is typically not instrumental in achieving the goal of the invention. Furthermore, there may be a correlation between a force associated with such magnetic attraction and a reduction in overall performance of the rolling element bearing, for instance by increasing friction. Therefore, the strength of magnetic attraction between the rolling elements of the third set and the third and/or the fourth rolling surface is preferably kept as low as possible. This may be achieved in various ways as will be evident from the remainder of the present disclosure.

Each rolling element of the third set may comprise at least a part essentially made of a material suitable for providing an attracting magnetic interaction with the guide. Each rolling element of the first set has a first volume. The at least part of each rolling element of the third set has a second volume. Advantageously, the first volume is larger than the second volume. Preferably, the part of each rolling element of the third set is arranged to roll on the first rolling surface. The material may for instance comprise or be essentially made of a permanently magnetized material such as a hard magnetic material (e.g. AlNiCo or ferrite). The material may also comprise or be essentially made of a composite comprising a magnetic substance, such as a powder (e.g. NdFeB, SmCo, ferrite), embedded for instance in a plastic matrix (e.g. polyamide or epoxy resin), which provides the advantage of providing complex geometries and optimizing the magnetic properties. The guide (e.g. the guiding surface) may comprise a soft ferromagnetic material, for instance a non-magnetized ferromagnetic material comprising iron or iron alloys such as (stainless) steel. Such an arrangement is fairly simple and cheap, furthermore a guide comprising a soft ferromagnetic material provides good mechanical properties for a guiding surface. Although the previous embodiment is preferred, optionally it is possible to switch the choice of material for the third set and the guide.

The non-recirculating rolling element bearing of the present invention may comprise a first state in which the motion stage is moved towards the first end of the guide and a second state in which the motion stage is moved towards the second end. In the first state a first rolling element of the third set may be positioned outside a first overlap between the first and second guiding surface. For instance, the first rolling element of the third set may be positioned between the second end of the guide and a first end of the motion stage arranged nearest to the second end of the guide. The magnetic interaction between the first rolling element of the third set and the guide biases a first part of the cage, extending from the first end of the motion stage towards the second end of the guide, towards the guide. In the second state a second rolling element of the third set may be positioned outside a second overlap between the first and second guiding surface. For instance, the second rolling element may be positioned between the first end of the guide and the second end of the motion stage nearest to the first end of the guide. The magnetic interaction between the second rolling elements of the third set and the guide biases a second part of the cage, extending from the second end of the motion stage towards the first end of the guide, towards the guide. Preferably, the first and the second rolling element of the third set flank at least part of the first set at either end, respectively. Advantageously, a distance between the first and second rolling element of the third set is larger than a length of the motion stage along the direction of motion. Preferably, the first and second rolling element are provided near opposing ends of the cage along the direction of motion, for instance the first and second rolling element form the outermost rolling elements of the first and third set combined. This may prevent bending away of the cage from the guide in the event that relatively large cage-overhangs are used.

The cage of a non-recirculating rolling element bearing in an overrunning cage configuration is typically only partially interposed between the guide and the motion stage. The first guiding surface extends along the direction of motion over a first length between opposing ends of the first guiding surface. The cage may extend over a second length along the direction of motion between opposing ends of the cage. The second guiding surface may extend over a third length between opposing ends of the second guiding surface along the direction of motion. The second length preferably is smaller than the first length and larger than the third length. Beneficially, the second length may essentially correspond to an average of the first and third length, because this may provide the largest stroke for a given length of the guide. The bearing may be arranged such that a travel of the second guiding surface essentially corresponds to two times a length difference between the second and third length. These measures may provide an optimal travel range given a specific build length of the bearing along the direction of motion.

Preferably, the guide comprises a first guiding surface being essentially V-shaped, wherein the first guiding surface may comprise a first and a second rolling surface. The second guiding surface of the motion stage may be essentially V-shaped and be complimentary to the first guiding surface. The second guiding surface may comprise a third and a fourth rolling surface. The third and fourth rolling surface may be arranged opposite to the first and second rolling surface, respectively. Preferably, the first and second rolling surface are arranged to be essentially in parallel with the third and fourth rolling surface, respectively.

In an embodiment comprising V-shaped guiding surfaces, the cage may comprise a first, a second and a third set of rolling elements positioned along the direction of motion. Optionally a fourth set of rolling elements is provided. The first set may be arranged to roll along the first and third surface. The second set may be arranged to roll along the second and fourth rolling surface. The third set may be arranged to roll along the first rolling surface and optionally the third rolling surface. The optional fourth set may be arranged to roll along the second rolling surface and optionally the fourth rolling surface. The benefit of such first and second guiding surfaces, each being configured to have a V-shaped cross section orthogonal to the direction of motion, is that this constrains the movement of the cage and motion stage in a direction orthogonal to the direction of motion. Preferably, the V-shaped guiding surface comprises a groove provided at an intersection of the first and second rolling surface to simplify manufacturing of such rolling surfaces. In an alternative embodiment, the guiding surface is configured such that a cross section of the guiding surface orthogonal to the direction of motion has an arc-shape, a gothic arc-shape or any suitable shape, such as a combination of the previously mentioned shapes.

Advantageously, the cage for embodiments comprising V-shaped guiding surfaces comprises a cage body comprising a first and a second surface, wherein the second surface may adjoin the first surface. In a projection of the cage onto a plane orthogonal to the direction of motion or in an intersection of the cage according to the plane, the first surface and the second surface define a first and second normal, respectively, wherein the first and second normal may intersect one another. The first and second surface may be arranged to face the first and the second rolling surface. Preferably, the first and second surface are arranged to be essentially in parallel with the first and second rolling surface, respectively. The first set and the part of each rolling element of the third set may have a first and a second clearance, respectively, with respect to the second surface. Preferably, the first clearance is smaller than the second clearance. This may reduce the attracting force between the part of each rolling element of the third set and the guide, which may result in less frictional forces.

There are essentially two configurations of rolling element bearings according to the present invention comprising V-shaped guiding surfaces. A first configuration often referred to as a crossed roller bearing typically provides a better accuracy and a second configuration often referred to as a needle bearing typically provides a better load capacity and stiffness. In a crossed roller bearing configuration, the V-shape of the first guiding surface is configured for pointing away from the V-shape of the second guiding surface, preferably pointing away in a direction opposite of the V-shape of the second guiding surface. In a linear bearing having such crossed roller bearing configuration rolling elements of the first set and rolling elements of the second set at least in part overlap in a projection of the cage on a plane perpendicular to the direction of motion. In V-type roller bearing configuration such as a needle bearing configuration, the V-shape of the first guiding surface is configured for pointing in a same direction as the V-shape of the second guiding surface. In a linear bearing having such configuration rolling elements of the first set and rolling elements of the second set do not overlap in a projection of the cage on a plane perpendicular to the direction of motion. In a needle bearing configuration the axes of rotation of the first set and the second set preferably intersect one another.

In a non-recirculating rolling element bearing the cage is typically arranged such that rolling elements of each set have an essentially fixed relative position with respect to the cage. Such non-recirculating element configuration has the benefit of improved accuracy and precision compared to recirculating element bearings. Furthermore, it may improve the robustness of the rolling element bearing.

The cage may be configured for retaining rolling elements of each set, because this simplifies assembly and improves robustness of the rolling element bearing. Preferably, the cage comprises a cage body arranged for retaining rolling elements of each set. This may be achieved by a cage comprising a first and second elongated cage body part configured to form an enclosure that for instance in part encloses the rolling elements of the plurality of rolling elements. Additionally or alternatively, the cage body may comprise or be configured to house a set of shafts configured for mounting rolling elements of a set of rolling elements (e.g. third and optionally fourth set) and providing an axis of rotation for the respective rolling elements. For embodiments wherein the cage body is configured to house a set of shafts, each rolling element of the respective set preferably comprises a shaft, wherein the shaft is beneficially rigidly attached to such rolling element. Each set of rolling elements may form an array of rolling elements arranged along the direction of motion. The cage body may comprise cage body sections along the length of the cage body.

Rolling elements in the present disclosure are preferably rollers, because these provide a higher stiffness and load capacity (e.g. static, dynamic) and meanwhile offer the least amount of friction resulting in less wear and improving the lifetime of the rolling element bearing. Rollers in this disclosure should be interpreted in a broad sense and also includes needle rollers. Beneficially, a rolling element in the present disclosure have a uniform shape defined by a diameter and a height, wherein the latter is defined as a distance between opposing ends along a direction essentially parallel to an axis of rotation of the corresponding rolling element. Each rolling element of the first set may have a first height and the part of each rolling element of the third set may have a second height. The first and second height may be different to allow optimizing the load capacity and the magnetic interaction with the guide simply and independently. Beneficially, the second height is smaller than the first height. This may reduce the magnetic attraction force between the part and any surroundings other than the rolling surface on which the part is arranged to roll, thereby limiting or preventing the generation of frictional forces. Additionally or alternatively, each rolling element of the first set may have a first diameter and the part of each rolling element of the third set may have a second diameter, wherein the second diameter is smaller than the first diameter. Having a smaller second diameter has the benefit that the part of each rolling element of the third set may be configured only to roll along the first guiding surface (e.g. first rolling surface) of the guide, which represents the relevant surface for reducing or preventing the cage from bending away from the guide.

To achieve a uniform load-bearing capacity and accuracy along the entire stroke of the motion stage, for instance in embodiments comprising third and/or fourth sets of rolling elements dimensioned differently (e.g. smaller diameter and/or height) or comprising materials (e.g. AlNiCo) having substantially different material properties (e.g. lower E-modulus and/or hardness) than rolling elements of the corresponding first or second set, it may be beneficial to configure the bearing such that outer rolling elements of the third and/or fourth rolling elements remain outside an overlap of the guide and the motion stage in any state. For instance, the non-recirculating rolling element bearing may be configured such that the second rolling element is positioned between the first end of the guide and the second end of the motion stage in the first state and that the first rolling element is positioned between the second end of the guide and the first end of the motion stage in the second state. For such embodiments the first and second length are preferably corrected by the offset created by such outer rolling elements.

Preferably, the part of each rolling element of the third set is magnetized in a direction of magnetization being essentially axial or in other words essentially parallel to an axis of rotation of the part of the rolling element. These are simplest to manufacture and often cheapest. Alternatively, the part may be magnetized in other directions, such as radially with respect to the axis of rotation. For embodiments wherein the part forms an annular ring, the direction of magnetization is preferably axial or radial.

An optional fourth set of rolling elements may be provided, which fourth set is arranged for rolling along the second rolling surface. Each rolling element of the fourth set may comprise at least a part essentially made of permanently magnetized material. Such fourth set may further reduce or prevent the cage from bending away from the guide. Each rolling element of the second set and the part of each rolling element of the fourth set may have a third and a fourth clearance, respectively, with respect to the first surface. Preferably, the third clearance is smaller than the fourth clearance. The preferred features of rolling elements of the third set equally apply mutatis mutandis to the rolling elements of the fourth set. In a beneficial embodiment the rolling elements of the fourth set are essentially similar to rolling elements of the third set.

An exemplary embodiment of a rolling element bearing according to the present invention is arranged to provide a linear motion of the motion stage. For instance, the first guiding surface defines a first longitudinal axis of motion and the second guiding surface defines a second longitudinal axis of motion. Preferably, the first longitudinal axis and the second longitudinal axis are configured essentially in parallel.

The cage may comprise a plurality of first recesses arranged for retaining rolling elements of the first set. The cage may for instance not be configured for retaining rolling elements of the third set directly. In such event the rolling element bearing may comprise a set of adapters received in a subset of the plurality of first recesses, wherein the adapters are configured to rotatably retain a rolling element of the third set.

Each adapter may comprise an adapter body arranged to be received in one of the plurality of first recesses, for instance one of the subset of the plurality of first recesses. Preferably, the adapter body comprises or is essentially made from a non-ferromagnetic material, such as a ceramic or a plastic material. The adapter body may be configured to in part occupy one of the plurality of first recesses. The adapter body may be configured to leave vacant an unoccupied part, which unoccupied part may be arranged to rotatably retain a rolling element of the third set. Preferably, the adapter body comprises a second recess arranged to rotatably retain a rolling element of the third set. The unoccupied part may comprise the second recess at least in part.

Preferably, the adapter body is fixated (e.g. clamped or glued) in the first recess such that movement of the adapter body in the first recess relative to the cage is prevented during movement of the cage along the first guiding surface (e.g. first rolling surface).

In an alternative embodiment, the rolling element bearing comprises a set of adapters comprising an adapter body fixedly connected to an end of the cage (one or both of either ends along the direction of motion), such as to form an extending part of the cage. The adapter body may for instance comprise a second recess arranged to rotatably retain a rolling element of the third set. Preferably, the adapter body is fixedly connected at either end in extension of the cage along the direction of motion. Each adapter body may be fixedly connected to the cage in a releasable manner.

In addition to rotatably retaining a rolling element of the third set or alternatively, the adapter body of either type may comprise or be configured to house a shaft configured to mount a rolling element of the third set, and providing an axis of rotation for the rolling element (fixedly or rotatably) mounted on the shaft. For embodiments wherein the adapter body is configured to house a set of shafts, each rolling element of the third set preferably comprises a shaft, wherein the shaft is beneficially rigidly attached to such rolling element.

Such adapters described in the previous paragraphs may be equally provided for retaining rolling elements of the fourth set. In such event the cage may comprise a plurality of third recesses arranged for retaining rolling elements of the second set. The cage may for instance not be configured for retaining rolling elements of the fourth set directly. The rolling element bearing may comprise a second set of adapters received in a subset of the plurality of third recesses, wherein the adapters are configured to rotatably retain a rolling element of the fourth set. In the alternative embodiment, wherein the adapter body is fixedly connected to an end of the cage, the adaptor body may comprise a fourth recess arranged to rotatably retain a rolling element of the fourth set or an additional adaptor body arranged to rotatably retain a rolling element of the fourth set may be provided, wherein the additional adaptor body may be connected to at least one of the cage and the adaptor configured for retaining a rolling element of the fourth set.

According to a second aspect of the present invention there is provided an assembly comprising a moving body and two rolling element bearings in an overrunning cage configuration according to the first aspect of the present invention. The rolling element bearings may be arranged substantially in parallel. The motion stages may be fixedly connected to opposing sides of the moving body.

### Brief description of the figures

Aspects of the invention will now be described in more detail with reference to the appended drawings, wherein same reference numerals illustrate same features and wherein:
Fig. 1 A-B represents cross sectional views along a direction of motion of an embodiment of a rolling element bearing according to the present invention in various states.
Fig. 2 represents a perspective view of an embodiment of a rolling element bearing according to the present invention for a V-shaped guiding surface in a crossed roller bearing configuration.
Fig. 3 represents a perspective view of an embodiment of a rolling element bearing according to the present invention for a V-shaped guiding surface in a needle bearing configuration.
Fig. 4 A-F represents a cross-section orthogonal to the direction of motion of embodiments of a rolling element of the third set according to the present invention.
Fig. 5A represents a cross sectional view of an embodiment of a rolling element bearing according to the present invention. Fig. 5 B, C, D and E represent cross sectional views orthogonal to the direction of motion of the embodiment of Fig. 5A along B-B, C-C, D-D and E-E, respectively.
Fig. 6A-C represents cross sections of various embodiments of cages for a rolling element bearing according to the present invention.

### Detailed Description

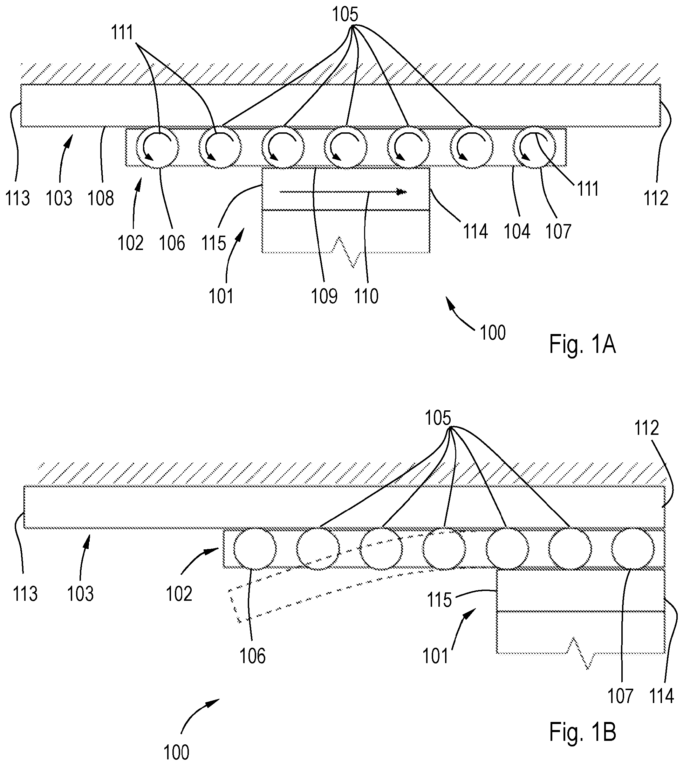

Referring to Fig. 1A and 1B, a rolling element bearing 100 according to the present invention comprises a motion stage 101 arranged at a first side of a cage 102 and a guide 103 arranged at a second side of the cage 102 opposite to the first side. The cage 102 comprises a cage body 104, a first set of rolling elements 105 and a third set of rolling elements comprising a first rolling element 106 and second rolling element 107 flanking (at least part of) the first set. The cage body 104 may be configured to act as a cage by retaining the plurality of rolling elements 105, 106, 107. The rolling elements 105, 106, 107 are configured for rolling on a first guiding surface 108 of the guide 103 and optionally a second guiding surface 109 of the motion stage 101.

The motion stage 101 is for instance configured for moving with respect to the cage 102 along a first direction of motion 110 towards a first end 112 of the guide 103. The rolling elements 105, 106, 107 of the cage 102 may be configured to roll on the second guiding surface 109 of the motion stage 101. As a result, rolling elements interacting with the second guiding surface 109 shall rotate with a first direction of rotation 111 corresponding to the first direction of motion 110. These rotating rolling elements in turn move the cage 102 along the guide 103 in the first direction of motion 110, because rolling elements interacting with the second guiding surface 109 roll on the first guiding surface 108 of the guide 103. Evidently, a movement of the motion stage 101 in a second direction of motion opposite to the first direction of motion 110 also results in a rotation of the rolling elements with a second direction of rotation opposite to the first direction of rotation 111. Consequently, the cage 102 moves in the second direction of motion.

Each rolling element 106, 107 of the third set is arranged to be magnetically attracted towards the guide 103, such as to bias the cage 102 towards the guide 103. This limits or prevents the bending away (see dashed outline Fig. 1B)) of the cage 102 from the guide 103. The rolling elements of the third set 106, 107 may thus be configured to roll on the first guiding surface and not the second guiding surface. In a first state (see Fig. 1B), in which the motion stage 101 is moved towards the first end 112 of the guide 103, the first rolling element 106 of the third set is located between a first end 115 of the motion stage 101 and the second end 113 of the guide 103. This prevents or limits the overhang of the cage 102 located between the first end 115 of the motion stage 101 and the second end 113 of the guide 103 from bending away from the guide 103. In a second state (not shown), in which the motion stage 101 is moved towards the second end 113, the second rolling element 107 of the third set is located between a second end 114 of the motion stage 101 and the first end 112 of the guide 103. This prevents the overhang of the cage 102 located between the second end 114 of the motion stage 101 and the first end 112 of the guide 103 from bending away from the guide 103. Possibly, the third set comprises more than one rolling element 106 and/or 107. These may also be provided in between adjacent rolling elements 105 of the first set. According to a preferred embodiment, at least the outer rolling elements 106, 107 are rolling elements belonging to the third set. These rolling elements 106, 107 comprise or are essentially made from a magnetized hard magnetic material and the first guiding surface 108 comprises or is essentially made from a soft ferromagnetic material.

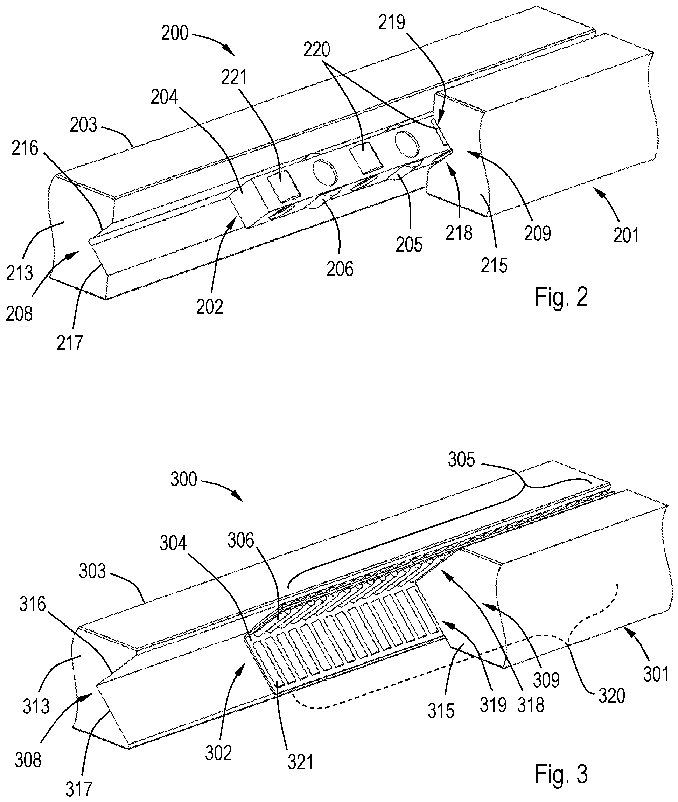

Referring to Fig. 2 and 3, a crossed roller bearing 200 or a needle roller bearing 300 according the present invention may be configured such that the first guiding surface 208, 308 of the guide 203, 303 comprises a first rolling surface 216, 316 and a second rolling surface 217, 317 and the second guiding surface 209, 309 of the motion stage 201, 301 comprises a third rolling surface 218, 318 and a fourth rolling surface 219, 319. In such embodiments, the cage 202, 302 comprises a plurality of rolling elements comprising a first set of rolling elements 205, 305 configured for rolling on the first 216, 316 and third 218, 318 rolling surface and a second set of rolling elements 220, 320 configured for rolling on the second 217, 317 and fourth 219, 319 rolling surface.

According to a preferred embodiment, a first rolling element 206, 306 and a second rolling element (not shown) of a third set flanks the first set of rolling elements 205, 305 at either end along the direction of motion. In the shown state, the first rolling element 206, 306 of the third set is located between a second end 213, 313 of the guide 203, 303 and a first end 215, 315 of the motion stage 201, 301. The rolling elements optionally comprise a first rolling element 221, 321 and a second rolling element (not shown) of a fourth set configured to flank the second set of rolling elements 220, 320 at either end along the direction of motion. Each rolling element of the third set and optionally the fourth set comprises at least a part essentially made of a permanently magnetized material such as a magnetized hard magnetic material. Furthermore, the first 216, 316 and the second 217, 317 rolling surface and optionally the third 218, 318 and fourth 219, 319 rolling surface comprises or is essentially made from a soft ferromagnetic material.

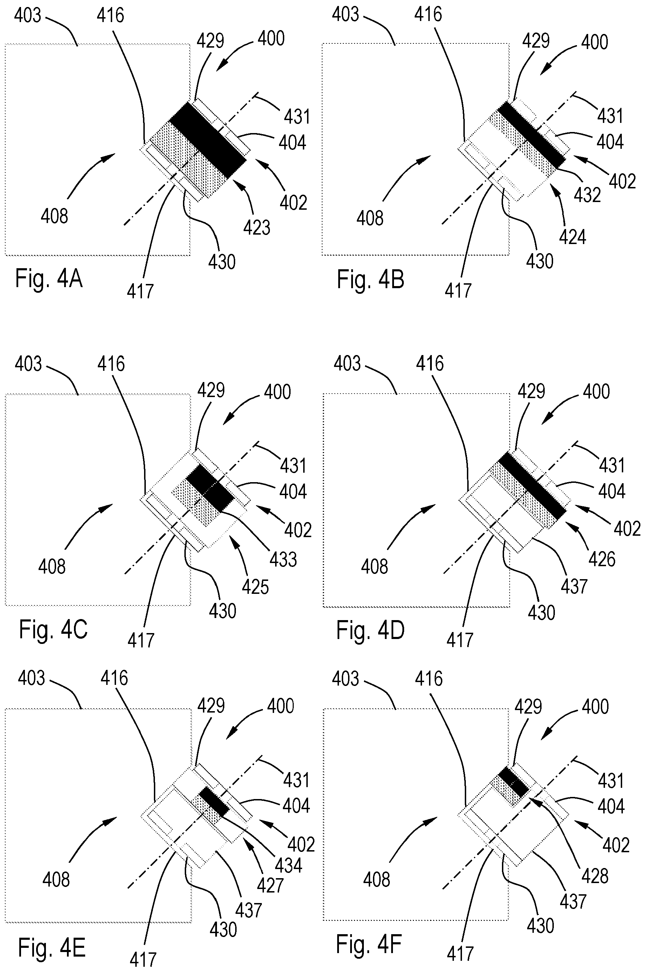

Further referring to Fig. 4A to 4F, a cage 402 of a cross-roller type bearing 400 may comprise a cage body 404 configured to form a cage for retaining rolling elements 423, 424, 425, 426, 427, 428, wherein the cage 402 or cage body 404 is configured for partly enclosing such rolling elements. The guide 403 may comprise a first rolling surface 416 and a second rolling surface 417, which may form a first guiding surface 408. The cage body comprises a first surface 429 arranged opposite to the first rolling surface 416 and a second surface 430 arranged opposite to the second rolling surface 417. The cage 402 is suitable for use in a cross-roller type bearing 200 shown in Fig. 2

Various embodiments of rolling elements 423, 424, 425, 426, 427, 428 are suitable for being used as rolling elements of the third set and optionally the fourth set. A part of such rolling elements 423, 424, 425, 426, 427, 428 is essentially made of a permanently magnetized material (hatched and solid). The permanently magnetized material is magnetized according to a direction of magnetization to form a first pole (hatched section) having a first sign and a second pole (solid section) having a second sign opposite to the first sign. Preferably, the rolling elements 423, 424, 425, 426, 427, 428 are axially magnetized, wherein the direction of magnetization is beneficially essentially parallel to an axis of rotation 431 of the rolling elements 423, 424, 425, 426, 427, 428. Beneficially, the magnetic material is arranged in a rotational symmetric manner with respect to the axis of rotation 431 and configured to magnetically interact stronger with one rolling surface of the guide, such as the first rolling surface 416, associated with the rolling element 423, 424, 425, 426, 427, 428 than another rolling surface of the guide, such as the second rolling surface 417, not associated with the rolling element 423, 424, 425, 426, 427, 428. To this end, the clearance of the magnetic material of rolling elements of the third set with the first surface 429 is smaller than the clearance of the magnetic material of rolling elements of the third set with the second surface 430.

For instance, the rolling elements 423, 424, 425 may have a same height as rolling elements of the first set and optionally the second set. In one of such embodiments the rolling element 423 comprises or is essentially made of a permanently magnetized material. The rolling element optionally comprises a central region devoid of magnetic material so as to form an annular ring essentially made of magnetic material, preferably magnetized axially or radially. Other of such embodiments comprise rolling elements 424, 425 that only in part 432, 433 comprise or are essentially made of a permanently magnetized material. In a first example the part 432 of the rolling element 424 is configured to roll along a rolling surface such as the first rolling surface 416. The part 432 optionally comprises a central region devoid of magnetic material so as to form an annular ring essentially made of magnetic material. In a second example the part 433 of the rolling element 425 is not exposed to a rolling surface such as the first rolling surface 416. Optionally, the part 432, 433 is axially flanked at either end with another material, the other material preferably being a non-hard magnetic material such as a ferromagnetic, ceramic or plastic material. In the event that only a part 432, 433 is magnetized, it is preferred that the rolling element is configured such that the part magnetically interacts stronger with the rolling surface of the guide, such as the first rolling surface 416, associated with the rolling element 424, 425 than the rolling surface of the guide, such as the second rolling surface 417, not associated with the rolling element 424, 425.

Alternatively, the rolling elements 426, 427, 428 may have a smaller height than the rolling elements of the first set and optionally the second set. Two of such embodiments comprise rolling elements 426, 428 essentially made of a permanently magnetized material. In a first example the rolling element 426 has essentially a same diameter as rolling elements of the first set. The rolling element 426 optionally comprises a central region devoid of magnetic material so as to form an annular ring essentially made of magnetic material, preferably magnetized axially or radially. In a second example the rolling element 428 have smaller diameter than rolling elements of the first set. Another embodiment comprises a rolling element 427 having essentially a same diameter as rolling elements of the first set, wherein only a central part 434 of the rolling element comprises or is essentially made of permanently magnetized material. Preferably, the dimensions of the cage recesses configured are adapted using an adapter 437 configured such that the rolling elements 426, 427, 428 are rotatably retained by the cage.

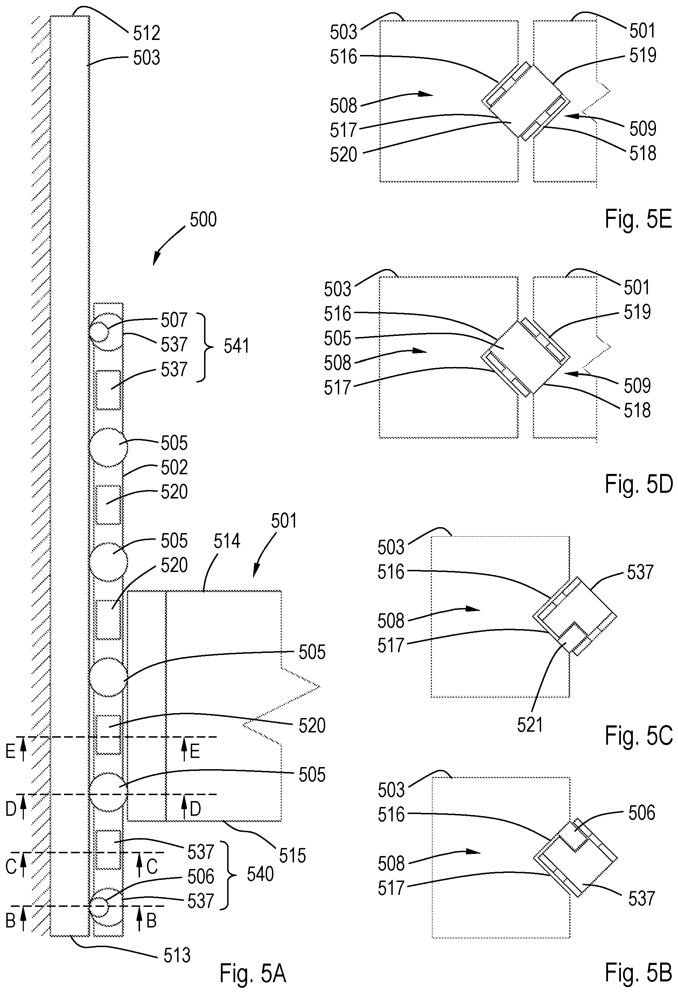

Further referring to Fig. 5A to 5E, the bearing 500 comprises a guide 503, a cage 502 and a motion stage 501. The guide 503 comprises a first guiding surface 508 being essentially V-shaped and comprising a first rolling 516 and a second rolling surface 517. The motion stage 501 comprises a second guiding surface 509 being essentially V-shaped and comprising a third rolling surface 518 and a fourth rolling surface 519. The cage comprises a first 505, a second 520, a third 506, 507 and a fourth 521 (only one shown)set of rolling elements. The rolling elements of the first set 505 are configured for rolling along the first rolling surface 516 and in the event that the motion stage 501 is placed in correspondence with a rolling element of the first set 505 for rolling along the third rolling surface 518. The third set of rolling elements 506, 507 are configured for solely rolling along the first rolling surface 516. The rolling elements of the second set 520 are configured for rolling along the second rolling surface 517 and in the event that the motion stage 501 is placed in correspondence with a rolling element of the second set 520 for rolling along the fourth rolling surface 519. The fourth set of rolling elements 521 (only one shown) are configured for solely rolling along the second rolling surface 517.

In the first state (shown state) the motion stage 501 is moved to a first ultimate position nearest to the second end 513 of the guide. In this state a first part 540 of the cage 502 extends from the first end 515 of the motion stage 501. This first part 540 comprises the adapters 537 for outer rolling elements 506, 521 of the third and fourth set and therefore comprises rolling elements that do not support rolling along rolling surface 518 and 519, respectively. Similarly, in the second state (not shown) the motion stage 501 is moved to a second ultimate position nearest to the first end 512 of the guide. In this state a second part 541 of the cage 502 extends from the second end 514 of the motion stage 501. The first and second part form offsets for which the first and second length can be corrected.

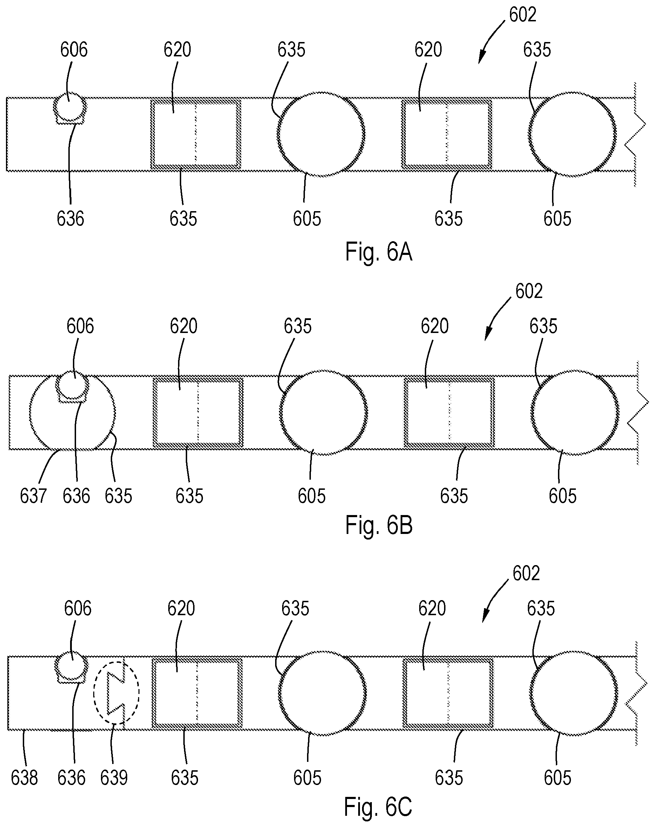

Referring to Fig. 6A, the cage 602 may be configured for having differently sized recesses configured for retaining rolling elements. First recesses 635 for retaining rolling elements of the first set 605 and second set 620 may have a first size. Second recesses 636 configured for retaining rolling elements of the third 606 and optionally the fourth set may have a second size being smaller than the first size.

Referring to Fig. 6B, the cage 602 may be configured for having similar sized first recesses 635 configured for retaining rolling elements. Rolling elements of the first set 605 and the second set 620 are directly received in such first recesses 635. An adapter 637 may be placed in first recesses 635 of the cage 602 intended for retaining rolling elements of the third set 606 and optionally the fourth set. The adapter 637 comprises a second recess 636 being smaller than the first recess 635, which second recess 636 is suitable for directly receiving rolling elements of the third 606 and optionally the fourth set.

Referring to Fig. 6C, the cage 602 may be configured for having similar sized first recesses 635 configured for retaining rolling elements. Rolling elements of the first set 605 and the second set 620 are directly received in such first recesses 635. Such cage 602 may further comprise a connector 639 provided at opposing ends of the cage 601 along the direction of motion, which connector 639 is configured for connecting a cage extender 638 as an adapter suitable for directly receiving rolling elements of the third 606 and optionally the fourth set. The cage extender 638 comprises a second recess 636 being smaller than the first recess 635, which second recess 636 is suitable for directly receiving rolling elements of the third 606 and optionally the fourth set.

## Claims

1. Non-recirculating rolling element bearing (100, 200, 300, 400, 500) in an overrunning cage configuration, comprising:
a guide (103, 203, 303, 403, 503) defining a direction of motion and comprising a first guiding surface (108, 208, 308, 408, 508) being essentially V-shaped, wherein the first guiding surface comprises a first (216, 316, 416, 516) and a second (217, 317, 417, 517) rolling surface,
a motion stage (101, 201, 301, 501) arranged to move along the direction of motion between a first end (112, 512) and a second end (113, 213, 313, 513) of the guide, wherein the motion stage comprises a second guiding surface (109, 209, 309, 509) comprising a third (218, 318, 518) and a fourth (219, 319, 519) rolling surface arranged opposite to the first and second rolling surface, respectively,
a cage (102, 202, 302, 402, 502, 602) arranged to be partially interposed between the guide and the motion stage, which cage comprises a first (105, 205, 305, 505, 605), a second (220, 320, 520, 620) and a third set of rolling elements (106, 107, 206, 306, 423, 424, 425, 426, 427, 428, 506, 507, 606), wherein the first set is arranged to roll on the first and third rolling surface, the second set is arranged to roll on the second and fourth rolling surface and the third set is arranged to roll on the first rolling surface,
**characterized in that** the guide and each rolling element of the third set are arranged to magnetically attract one another so as to bias the cage towards the guide,
and **in that** in a first state in which the motion stage is moved towards the first end of the guide a first rolling element (106, 206, 306, 506, 606) of the third set is positioned between the second end of the guide and a first end (115, 215, 315, 515) of the motion stage arranged nearest to the second end of the guide, and **in that** in a second state in which the motion stage is moved towards the second end of the guide a second rolling element of the third set is positioned between the first end of the guide and a second end (114, 514) of the motion stage nearest to the first end of the guide.

2. Rolling element bearing according to claim 1, wherein each rolling element of the third set is configured to magnetically attract the first rolling surface stronger than the second rolling surface, preferably wherein each rolling element of the third set is further configured to magnetically attract the first rolling surface stronger than at least one of the third and the fourth rolling surface.

3. Rolling element bearing according to claim 1 or 2, wherein each rolling element of the third set comprises at least a part made of a permanently magnetized material, preferably wherein each rolling element of the first set has a first volume and wherein the at least part of each rolling element of the third set has a second volume, and wherein the first volume is larger than the second volume, preferably wherein the part of each rolling element of the third set is arranged to roll on the first rolling surface.

4. Rolling element bearing according to claim 3, wherein the cage comprises a cage body (104, 404) comprising a first (429) and a second (430) surface arranged to face the first and the second rolling surface, wherein the first set and the part of each rolling element of the third set have a first and a second clearance, respectively, with respect to the second surface, and wherein the first clearance is smaller than the second clearance.

5. Rolling element bearing according to claim 3 or 4, wherein each rolling element of the first set has a first height, and wherein the part of each rolling element of the third set has a second height, wherein the second height is smaller than the first height.

6. Rolling element bearing according to any one of the claims 3 to 5, wherein each rolling element of the first set has a first diameter, and wherein the part of each rolling element of the third set has a second diameter, wherein the second diameter is smaller than the first diameter.

7. Rolling element bearing according to any one of the claims 3 to 6, wherein the part of each rolling element of the third set is magnetized in a direction of magnetization being essentially axial.

8. Rolling element bearing according to any one of the previous claims, comprising a fourth set of rolling elements (221,321, 521) arranged for rolling on the second rolling surface, wherein each rolling element of the fourth set comprises at least a part made of permanently magnetized material, wherein each rolling element of the second set and the part of each rolling element of the fourth set have a third and a fourth clearance, respectively, with respect to the first surface, and wherein the third clearance is smaller than the fourth clearance, preferably wherein rolling elements of the fourth set are essentially similar to rolling elements of the third set.

9. Rolling element bearing according to any one of the previous claims, wherein the guide, the cage and the motion stage are each configured for providing a linear motion of the motion stage.

10. Rolling element bearing according to any one of the previous claims, wherein the first and the second rolling element of the third set are configured to flank at least part of the first set, respectively.

11. Rolling element bearing according to any one of the previous claims, wherein a first distance between axes of the first and second rolling element of the third set is larger than a second distance between the first and second end of the motion stage.

12. Rolling element bearing according to any one of the previous claims, wherein along the direction of motion the first guiding surface extends over a first length between the corresponding first and second end, the cage extends over a second length and the second guiding surface extends over a third length between the corresponding first and second end, wherein the second length is smaller than the first length and larger than the third length, preferably the second length is essentially an average of the first and third length, preferably a travel of the second guiding surface is two times a length difference between the second and third length.

13. Rolling element bearing according to any one of the previous claims, comprising an adapter (437, 537, 637) comprising an adapter body arranged to be received in a first recess of a plurality of first recesses (635) of the cage arranged for retaining rolling elements of the first set, wherein the adapter body is configured to in part occupy the first recess and leave vacant an unoccupied part arranged to rotatably retaining a rolling element of the third set, preferably the adapter body comprises a second recess (636) arranged to rotatably retain a rolling element of the third set.

14. Assembly comprising a moving body and two rolling element bearings of any one of the previous claims, wherein the rolling element bearings are arranged substantially in parallel, and wherein the motion stages are fixedly connected to opposite ends of the moving body.

## Patentansprüche

1. Nicht umlaufendes Wälzlager (100, 200, 300, 400, 500) in einer Freilaufkäfigkonfiguration, umfassend:
eine Führung (103, 203, 303, 403, 503), die eine Fahrtrichtung definiert und umfassend eine erste Führungsoberfläche (108, 208, 308, 408, 508), die im Wesentlichen V-förmig ist, wobei die erste Führungsoberfläche eine erste (216, 316, 416, 516) und eine zweite (217, 317, 417, 517) Wälzoberfläche umfasst,
eine Fahrstufe (101, 201, 301, 501), die angeordnet ist, um sich entlang der Fahrtrichtung zwischen einem ersten Ende (112, 512) und einem zweiten Ende (113, 213, 313, 513) der Führung zu bewegen, wobei die Fahrstufe eine zweite Führungsoberfläche (109, 209, 309, 509) umfasst, umfassend eine dritte (218, 318, 518) und eine vierte (219, 319, 519) Wälzoberfläche, die gegenüber der ersten beziehungsweise der zweiten Wälzoberfläche angeordnet sind,
einen Käfig (102, 202, 302, 402, 502, 602), der angeordnet ist, um teilweise zwischen der Führung und der Fahrstufe zwischengelegt zu sein, wobei der Käfig einen ersten (105, 205, 305, 505, 605), einen zweiten (220, 320, 520, 620) und einen dritten Satz von Wälzelementen (106, 107, 206, 306, 423, 424, 425, 426, 427, 428, 506, 507, 606) umfasst, wobei der erste Satz angeordnet ist, um auf der ersten und der dritten Wälzoberfläche zu rollen, der zweite Satz angeordnet ist, um auf der zweiten und der vierten Wälzoberfläche zu rollen und der dritte Satz angeordnet ist, um auf der ersten Wälzoberfläche zu rollen,
**dadurch gekennzeichnet, dass** die Führung und jedes Wälzelement des dritten Satzes angeordnet sind, um sich gegenseitig magnetisch anzuziehen, um den Käfig zu der Führung hin vorzuspannen,
und **dass** in einem ersten Zustand, in dem die Fahrstufe zu dem ersten Ende der Führung hin bewegt wird, ein erstes Wälzelement (106, 206, 306, 506, 606) des dritten Satzes zwischen dem zweiten Ende der Führung und einem ersten Ende (115, 215, 315, 515) der Fahrstufe positioniert ist, das am nächsten zu dem zweiten Ende der Führung angeordnet ist, und
**dass** in einem zweiten Zustand, in dem die Fahrstufe zu dem zweiten Ende der Führung hin bewegt wird, ein zweites Wälzelement des dritten Satzes zwischen dem ersten Ende der Führung und einem zweiten Ende (114, 514) der Fahrstufe positioniert ist, das am nächsten zu dem ersten Ende der Führung liegt.

2. Wälzlager nach Anspruch 1, wobei jedes Wälzelement des dritten Satzes konfiguriert ist, um die erste Wälzoberfläche stärker magnetisch anzuziehen als die zweite Wälzoberfläche, vorzugsweise wobei jedes Wälzelement des dritten Satzes ferner konfiguriert ist, um die erste Wälzoberfläche stärker magnetisch anzuziehen als mindestens eine der dritten und der vierten Wälzoberfläche.

3. Wälzlager nach Anspruch 1 oder 2, wobei jedes Wälzelement des dritten Satzes mindestens einen Teil umfasst, der aus einem permanent magnetisierten Material hergestellt ist, vorzugsweise wobei jedes Wälzelement des ersten Satzes ein erstes Volumen aufweist und wobei der mindestens eine Teil jedes Wälzelements des dritten Satzes ein zweites Volumen aufweist und wobei das erste Volumen größer als das zweite Volumen ist, vorzugsweise wobei der Teil jedes Wälzelements des dritten Satzes angeordnet ist, um auf der ersten Wälzoberfläche zu rollen.

4. Wälzlager nach Anspruch 3, wobei der Käfig einen Käfigkörper (104, 404) umfasst, umfassend eine erste (429) und eine zweite (430) Oberfläche, die angeordnet sind, um der ersten und der zweiten Wälzoberfläche zugewandt zu sein, wobei der erste Satz und der Teil jedes Wälzelements des dritten Satzes einen ersten beziehungsweise einen zweiten Spielraum in Bezug auf die zweite Oberfläche aufweisen und wobei der erste Spielraum kleiner als der zweite Spielraum ist.

5. Wälzlager nach Anspruch 3 oder 4, wobei jedes Wälzelement des ersten Satzes eine erste Höhe aufweist und wobei der Teil jedes Wälzelements des dritten Satzes eine zweite Höhe aufweist, wobei die zweite Höhe kleiner als die erste Höhe ist.

6. Wälzlager nach einem der Ansprüche 3 bis 5, wobei jedes Wälzelement des ersten Satzes einen ersten Durchmesser aufweist und wobei der Teil jedes Wälzelements des dritten Satzes einen zweiten Durchmesser aufweist, wobei der zweite Durchmesser kleiner als der erste Durchmesser ist.

7. Wälzlager nach einem der Ansprüche 3 bis 6, wobei der Teil jedes Wälzelements des dritten Satzes in einer Magnetisierungsrichtung magnetisiert ist, die im Wesentlichen axial ist.

8. Wälzlager nach einem der vorstehenden Ansprüche, umfassend einen vierten Satz von Wälzelementen (221, 321, 521), die zum Rollen auf der zweiten Wälzoberfläche angeordnet sind, wobei jedes Wälzelement des vierten Satzes mindestens einen Teil umfasst, der aus permanent magnetisiertem Material hergestellt ist, wobei jedes Wälzelement des zweiten Satzes und der Teil jedes Wälzelements des vierten Satzes einen dritten beziehungsweise einen vierten Spielraum in Bezug auf die erste Oberfläche aufweisen und wobei der dritte Spielraum kleiner als der vierte Spielraum ist, vorzugsweise wobei Wälzelemente des vierten Satzes im Wesentlichen ähnlich zu Wälzelementen des dritten Satzes sind.

9. Wälzlager nach einem der vorstehenden Ansprüche, wobei die Führung, der Käfig und die Fahrstufe jeweils zum Bereitstellen einer linearen Fahrt der Fahrstufe konfiguriert sind.

10. Wälzlager nach einem der vorstehenden Ansprüche, wobei das erste und das zweite Wälzelement des dritten Satzes jeweils konfiguriert sind, um mindestens einen Teil des ersten Satzes zu flankieren.

11. Wälzlager nach einem der vorstehenden Ansprüche, wobei ein erster Abstand zwischen Achsen des ersten und des zweiten Wälzelements des dritten Satzes größer als ein zweiter Abstand zwischen dem ersten und dem zweiten Ende der Fahrstufe ist.

12. Wälzlager nach einem der vorstehenden Ansprüche, wobei sich entlang der Fahrtrichtung die erste Führungsoberfläche über eine erste Länge zwischen dem entsprechenden ersten und zweiten Ende erstreckt, sich der Käfig über eine zweite Länge erstreckt und sich die zweite Führungsoberfläche über eine dritte Länge zwischen dem entsprechenden ersten und zweiten Ende erstreckt, wobei die zweite Länge kleiner als die erste Länge und größer als die dritte Länge ist, vorzugsweise die zweite Länge im Wesentlichen ein Durchschnitt der ersten und der dritten Länge ist, vorzugsweise ein Betätigungsweg der zweiten Führungsoberfläche zweimal eine Längendifferenz zwischen der zweiten und der dritten Länge ist.

13. Wälzlager nach einem der vorstehenden Ansprüche, umfassend einen Adapter (437, 537, 637), umfassend einen Adapterkörper, der angeordnet ist, um in einer ersten Aussparung einer Vielzahl von ersten Aussparungen (635) des Käfigs aufgenommen zu werden, die zum Halten von Wälzelementen des ersten Satzes angeordnet sind, wobei der Adapterkörper konfiguriert ist, um die erste Aussparung teils zu belegen und einen unbelegten Teil frei zu lassen, der angeordnet ist, um ein Wälzelement des dritten Satzes drehbar zu halten, vorzugsweise der Adapterkörper eine zweite Aussparung (636) umfasst, die angeordnet ist, um ein Wälzelement des dritten Satz drehbar zu halten.

14. Baugruppe, umfassend einen beweglichen Körper und zwei Wälzlager nach einem der vorstehenden Ansprüche, wobei die Wälzlager im Wesentlichen parallel angeordnet sind und wobei die Fahrstufen mit gegenüberliegenden Enden des beweglichen Körpers fest verbunden sind.

## Revendications

1. Palier à éléments roulants sans recirculation (100, 200, 300, 400, 500) dans une configuration de cage à roue libre, comprenant :
un guide (103, 203, 303, 403, 503) définissant un sens de déplacement et comprenant une première surface de guidage (108, 208, 308, 408, 508) essentiellement en forme de V, dans lequel la première surface de guidage comprend une première (216, 316, 416, 516) et une deuxième (217, 317, 417, 517) surface de roulement,
un étage mobile (101, 201, 301, 501) conçu pour se déplacer le long du sens de déplacement entre une première extrémité (112, 512) et une seconde extrémité (113, 213, 313, 513) du guide, dans lequel l'étage mobile comprend une deuxième surface de guidage (109, 209, 309, 509) comprenant une troisième (218, 318, 518) et une quatrième (219, 319, 519) surface de roulement agencées à l'opposé de la première et de la deuxième surface de roulement, respectivement,
une cage (102, 202, 302, 402, 502, 602) conçue pour être partiellement interposée entre le guide et l'étage mobile, laquelle cage comprend un premier (105, 205, 305, 505, 605), un deuxième (220, 320, 520, 620) et un troisième ensemble d'éléments roulants (106, 107, 206, 306, 423, 424, 425, 426, 427, 428, 506, 507, 606), dans lequel le premier ensemble est conçu pour rouler sur la première et la troisième surface de roulement, le deuxième ensemble est conçu pour rouler sur la deuxième et la quatrième surface de roulement et le troisième ensemble est conçu pour rouler sur la première surface de roulement,
**caractérisé en ce que** le guide et chaque élément roulant du troisième ensemble sont conçus pour s'attirer magnétiquement l'un l'autre afin de solliciter la cage vers le guide,
et **en ce que** dans un premier état dans lequel l'étage mobile est déplacé vers la première extrémité du guide un premier élément roulant (106, 206, 306, 506, 606) du troisième ensemble est positionné entre la seconde extrémité du guide et une première extrémité (115, 215, 315, 515) de l'étage mobile agencée la plus près de la seconde extrémité du guide, et
**en ce que** dans un second état dans lequel l'étage mobile est déplacé vers la seconde extrémité du guide un second élément roulant du troisième ensemble est positionné entre la première extrémité du guide et une seconde extrémité (114, 514) de l'étage mobile la plus près de la première extrémité du guide.

2. Palier à éléments roulants selon la revendication 1, dans lequel chaque élément roulant du troisième ensemble est configuré pour exercer une attraction magnétique plus forte sur la première surface de roulement que sur la deuxième surface de roulement, de préférence dans lequel chaque élément roulant du troisième ensemble est en outre configuré pour exercer une attraction magnétique plus forte sur la première surface de roulement que sur au moins l'une parmi la troisième et la quatrième surface de roulement.

3. Palier à éléments roulants selon la revendication 1 ou 2, dans lequel chaque élément roulant du troisième ensemble comprend au moins une partie constituée d'un matériau magnétisé de façon permanente, de préférence dans lequel chaque élément roulant du premier ensemble a un premier volume et dans lequel l'au moins une partie de chaque élément roulant du troisième ensemble a un second volume, et dans lequel le premier volume est supérieur au second volume, de préférence dans lequel la partie de chaque élément roulant du troisième ensemble est conçue pour rouler sur la première surface de roulement.

4. Palier à éléments roulants selon la revendication 3, dans lequel la cage comprend un corps de cage (104, 404) comprenant une première (429) et une seconde (430) surface conçues pour faire face à la première et à la deuxième surface de roulement, dans lequel le premier ensemble et la partie de chaque élément roulant du troisième ensemble ont un premier et un second débattement, respectivement, par rapport à la seconde surface, et dans lequel le premier débattement est inférieur au second débattement.

5. Palier à éléments roulants selon la revendication 3 ou 4, dans lequel chaque élément roulant du premier ensemble a une première hauteur, et dans lequel la partie de chaque élément roulant du troisième ensemble a une seconde hauteur, dans lequel la seconde hauteur est inférieure à la première hauteur.

6. Palier à éléments roulants selon l'une quelconque des revendications 3 à 5, dans lequel chaque élément roulant du premier ensemble a un premier diamètre, et dans lequel la partie de chaque élément roulant du troisième ensemble a un second diamètre, dans lequel le second diamètre est plus petit que le premier diamètre.

7. Palier à éléments roulants selon l'une quelconque des revendications 3 à 6, dans lequel la partie de chaque élément roulant du troisième ensemble est magnétisée dans une direction de magnétisation étant essentiellement axiale.

8. Palier à éléments roulants selon l'une quelconque des revendications précédentes, comprenant un quatrième ensemble d'éléments roulants (221, 321, 521) conçus pour rouler sur la deuxième surface de roulement, dans lequel chaque élément roulant du quatrième ensemble comprend au moins une partie constituée de matériau magnétisé de façon permanente, dans lequel chaque élément roulant du deuxième ensemble et la partie de chaque élément roulant du quatrième ensemble ont un troisième et un quatrième débattement, respectivement, par rapport à la première surface, et dans lequel le troisième débattement est inférieur au quatrième débattement, de préférence dans lequel des éléments roulants du quatrième ensemble sont essentiellement similaires à des éléments roulants du troisième ensemble.

9. Palier à éléments roulants selon l'une quelconque des revendications précédentes, dans lequel le guide, la cage et l'étage mobile sont chacun configurés pour fournir un déplacement linéaire de l'étage mobile.

10. Palier à éléments roulants selon l'une quelconque des revendications précédentes, dans lequel le premier et le second élément roulant du troisième ensemble sont configurés pour flanquer au moins une partie du premier ensemble, respectivement.

11. Palier à éléments roulants selon l'une quelconque des revendications précédentes, dans lequel une première distance entre des axes du premier et du second élément roulant du troisième ensemble est supérieure à une seconde distance entre la première et la seconde extrémité de l'étage mobile.

12. Palier à éléments roulants selon l'une quelconque des revendications précédentes, dans lequel le long du sens de déplacement la première surface de guidage s'étend sur une première longueur entre la première et la seconde extrémité correspondantes, la cage s'étend sur une deuxième longueur et la deuxième surface de guidage s'étend sur une troisième longueur entre la première et la seconde extrémité correspondantes, dans lequel la deuxième longueur est inférieure à la première longueur et supérieure à la troisième longueur, de préférence la deuxième longueur est essentiellement une moyenne de la première et de la troisième longueur, de préférence une course de la deuxième surface de guidage est égale à deux fois une différence de longueur entre la deuxième et la troisième longueur.

13. Palier à éléments roulants selon l'une quelconque des revendications précédentes, comprenant un adaptateur (437, 537, 637) comprenant un corps d'adaptateur conçu pour être reçu dans un premier évidement d'une pluralité de premiers évidements (635) de la cage conçus pour retenir des éléments roulants du premier ensemble, dans lequel le corps d'adaptateur est configuré pour en partie occuper le premier évidement et laisser vacante une partie inoccupée conçue pour retenir de manière rotative un élément roulant du troisième ensemble, de préférence le corps d'adaptateur comprend un second évidement (636) conçu pour retenir de manière rotative un élément roulant du troisième ensemble.

14. Ensemble comprenant un corps mobile et deux paliers d'éléments roulants selon l'une quelconque des revendications précédentes, dans lequel les paliers d'éléments roulants sont agencés sensiblement en parallèle, et dans lequel les étages mobiles sont reliés de manière fixe aux extrémités opposées du corps mobile.
